# NEUE EUROPÄISCHE PATENTSCHRIFT

(11) **EP 1 459 961 B2**
(45) Veröffentlichungstag und Bekanntmachung des Hinweises auf die Entscheidung über den Einspruch: **12.11.2014**
(45) Hinweis auf die Patenterteilung: 13.09.2006
(21) Anmeldenummer: 04003212.0
(22) Anmeldetag: 13.02.2004
(51) Int. Cl.: B62D 1/28, B62D 15/02

(54) **Kraftfahrzeug mit einer mechanischen Lenksäule und einem System zur Erfassung einer Abweichung der Fahrspur oder zur Erfassung einer Belegung einer Nachbarspur**
Motor vehicle with a mechanical steering column and a system to detect a deviation from a lane or to detect the occupation of the neighbouring lane
Véhicule à moteur avec colonne de direction mécanique et un système pour la détection de la déviation par rapport à une voie de circulation ou pour la détection de l'occupation d'une voie de circulation voisine

(30) Priorität: 14.02.2003 DE 10306100
(43) Veröffentlichungstag der Anmeldung: 22.09.2004
(73) Patentinhaber: AUDI AG, 85045 Ingolstadt (DE)
(72) Erfinder: Hofbauer, Manfred, 85092 Kösching (DE)
(74) Vertreter: Thielmann, Frank

(56) Entgegenhaltungen:
- EP-A- 0 640 903
- EP-A- 0 752 360
- EP-A- 0 980 813
- US-A- 1 686 020
- US-A- 4 726 437

## Beschreibung

Ein derartiges Kraftfahrzeug mit einem Fahrerassistenzsystem, das eine Erfassung der Spurabweichung ermöglicht und die daraus resultierenden Informationen verarbeitet, ist als sogenanntes LDW (Lane-Departure-Warning) -System bekannt. Ein weiteres System, welches den Fahrer beim Spurwechselvorgang über eine belegte Nachbarspur informiert, ist ein sogenanntes Spurwechselassistenzsystem. Die Information des Kraftfahrers über das jeweilige Systemerfassungsergebnis erfolgt - sofern der Fahrer informiert werden soll - mitunter über ein haptisches, über das Lenkrad erfassbares Signal. Häufig vibriert das Lenkrad, wozu ihm eine geeignete Vibrationseinrichtung, die im Bedarfsfall angesteuert wird, zugeordnet ist. Das Lenkrad wird hierzu bevorzugt verwendet, da am Lenkrad wegen der Reiz-Reaktions-Kompatibilität sehr kurze Reaktionszeiten erreichbar sind. Zudem wird bei einer Warnung über das Lenkrad nur der Fahrer informiert und die Mitfahrer nicht gestört.

Dem Kraftfahrer wird über eine derartige haptische Signaleinrichtung zwar eine für die Ist-Situation relevante Information anhand des Erfassungsergebnisses gegeben, er erfährt also beispielsweise, dass er von der Fahrspur abweicht und sich eine Gefahrensituation aufbauen kann. Er erhält jedoch keinerlei Richtungsinformation darüber, in welcher Richtung die Abweichung erfolgt bzw. wie er raschestmöglich eine Gegenreaktion einleiten kann.

EP 0 640 903 B1 offenbart ein Spurhaltesystem, mit Hilfe dessen - gegebenenfalls ohne Mitwirkung des Fahrers - das Fahrzeug in der Mitte der Spur gehalten wird. Dazu wird abhängig von den Signalen eines Spurerfassungssystems ein zusätzliches Drehmoment in das Lenksystem eingebracht, so dass bei Entfernung von der Fahrspurmitte eine Lenkvorlast ausgeübt wird. Dem Fahrer wird dabei das Gefühl vermittelt, in einer Art Wanne zu fahren. Bei einer zu großen Annäherung an die Fahrspurbegrenzung kann ein weiteres Drehmoment erzeugt werden, welches eine Vibration des Lenkrads auslöst und somit eine Warnwirkung erzielt. Ist das System deaktiviert, so kann es durch eine Kupplung ausgekuppelt werden.

Der Erfindung liegt das Problem zugrunde, ein Kraftfahrzeug anzugeben, das die Gabe einer Richtungsinformation in Abhängigkeit des Erfassungsergebnisses einer Spurerfassungs- oder einer Spurbelegungseinrichtung ermöglicht.

Zur Lösung dieses Problems ist bei einem Kraftfahrzeug der eingangs Art erfindungsgemäß eine Einrichtung zur direkten oder indirekten Gabe eines über das Lenkrad haptisch wahrnehmbaren, richtungsselektiven und impulsartig angelegten Drehmoments an die Lenksäule in Abhängigkeit einer von dem Erfassungssystem erfassten Richtungsabweichung oder gegebene Belegung der Nachbarspur vorgesehen.

Die erfindungsgemäß vorgesehene Einrichtung ermöglicht es, kurzzeitig und impulsartig mit einer Impulsdauer von z. B. einer Sekunde ein richtungsselektives Drehmoment an die Lenksäule anzulegen, wenn beispielsweise eine informationsrelevante Richtungsabweichung seitens des LDW-Systems detektiert wird. Wird beispielsweise erfasst, dass das Fahrzeug gefährlich in Richtung der Fahrbahnmittellinie driftet, würde ein richtungsselektives impulsartiges Drehmoment derart angelegt, dass das Lenkrad kurz und für eine haptische Erfassung hinreichend über die Einrichtung bzw. das von ihr gegebene Drehmoment nach rechts, der Gefahrensituation also ausweichend bewegt wird. Entsprechend umgekehrt wird die Bewegung eingeleitet, wenn das Fahrzeug unzulässig weit nach rechts fährt, das heißt, es wird eine impulsartige Gegenbewegung bzw. Gegensteuerung eingeleitet. Diese ist derart, dass sie nur kurzzeitig wahrnehmbar ist, ohne dass damit ein echtes Gegenlenken im Sinne eines Eingriffs in die Lenktätigkeit, die nach wie vor allein dem Fahrer obliegt, verbunden ist. Es erfolgt nur ein drehmomentbedingter kurzer Ruck oder eine kurze, nur um einen unwesentlichen Weg bzw. Drehwinkel erfolgende Bewegung des Lenkrads, ohne dass dem Fahrer die Kontrolle über das Lenkrad bzw. das Kraftfahrzeug entzogen wird. Dementsprechend sollte die Höhe des Lenkmoments möglichst niedrig, jedoch ausreichend größer als die Wahrnehmungsschwelle, ausgelegt sein. Aufgrund der Richtungsselektivität und der sofortigen Wahrnehmbarkeit wird der Fahrer sofort darüber informiert, wie er reagieren muss, um der sich anbahnenden Gefahrensituation zu entgehen bzw. diese auch sofort erkennen zu können. Selbstverständlich ist es denkbar, dieses impulsartige Drehmoment auch mehrfach kurz hintereinander anzulegen, so dass der Fahrer beispielsweise innerhalb von 5 Sekunden zwei- oder dreimal darauf hingewiesen wird, wenn z.B. das Erfassungsergebnis des Abweichungserfassungssystems immer noch das entsprechende Signal liefert. Auch ist es denkbar, zusätzlich zu diesem haptischen Signal ein Vibrationssignal zu erzeugen, das die generelle Gefahrensituation anzeigt, während die drehmomentbedingte impulsartige Lenkradbewegung die Richtungsinformation liefert.

Um mögliche Überreaktionen auf den Drehmomentimpuls zu vermeiden, kann der Impuls anschwellend ausgeführt werden. Zur Sicherstellung einer optimalen Warnfunktion sollte eine parallel erzeugte Lenkradvibration dann aber schlagartig einsetzen.

Die Einrichtung greift zur Gabe des Drehmoments an der Lenksäule an und erteilt dieser das Drehmoment. Weiterhin umfasst die Einrichtung einen Elektromotor, der zur Gabe des Drehmoments über ein entsprechendes Steuergerät, dem die Erfassungsergebnisse des Abweichungserfassungssystems gegeben werden, angesteuert wird. Dem Elektromotor ist ein mechanisches Eingriffsmittel zugeordnet, das durch den Betrieb des Elektromotors mit der Lenksäule gekoppelt wird oder über das der Elektromotor durch seinen Betrieb mit der Lenksäule gekoppelt wird. Es kommen hier keine elektromagnetischen oder pneumatischen Kupplungen zum Einsatz, der Elektromotor bringt sich selbst oder das mechanische Eingriffsmittel in Wirkungsverbindung.

Um zu vermeiden, dass die Einrichtung in irgendeiner Weise während des üblichen Fahrbetriebs die Lenkbewegung auch nur ansatzweise beeinflussen kann ist es zweckmäßig, wenn die Einrichtung nur während der Zeit, während der das Drehmoment zu geben ist, an der Lenksäule angreift oder in einer momentübertragenden Verbindung steht und während der übrigen Zeit von der Lenksäule gelöst ist bzw. nicht mit dieser bewegungsgekoppelt ist. Hierdurch werden u.a. erhöhte und ungleichförmige Lenkkräfte ausgeschlossen, die durch das Mitbewegen der Drehmomenterzeugungseinheit entstehen würden.

Die Einrichtung selbst sollte dabei derart ausgelegt sein und/oder das gegebene Drehmoment sollte derart bemessen sein, dass das Lenkrad vom Fahrer trotz in Betrieb befindlicher Einrichtung und/oder gegebenem Drehmoment in die entgegengesetzte Richtung drehbar ist. Die Einrichtung sperrt somit die Lenkradbewegung in eine zum angelegten Drehmoment bzw. zu der daraus resultierenden Lenkradverdrehung entgegengesetzte Richtung nicht. Es ist also stets möglich, dass ein Fahrer, der z. B. bewusst die mittlere Fahrspur beispielsweise bei einem Überholvorgang überfahren möchte, zwar eine kurzzeitige richtungsselektive Information erhält, wenn das Abweichungserfassungssystem eine hinreichende Annäherung an die Mittellinie detektiert, er diese Drehbewegung aber ohne weiteres überdrehen kann, um den Spurwechsel weiterführen zu können.

Ferner können Mittel zum Rückstellen des mechanischen Eingriffsmittels in eine Ruhelage vorgesehen sein, wenn der Elektromotor nicht mehr betrieben wird. Das heißt, das mechanische Eingriffsmittel wird über diese Rückstellmittel wieder in eine Ruhestellung zurückgezogen, also aus dem Eingriff mit der Lenksäule oder der Kopplung mit der Lenksäule gezogen, wenn der Elektromotor nicht mehr betrieben wird, mithin also auch kein Drehmoment mehr zu übertragen ist. Dabei können die Mittel eine oder mehrere Rückstellfedern umfassen, die das Eingriffsmittel in die Ruhelage bringen.

Die im Folgenden vorgeschlagenen Ausführungen basieren alle auf dem Prinzip, dass durch eine geringe Anfangsbewegung des Elektromotors unter Nutzung der physikalischen Prinzipien Trägheit und/oder Keilwirkung Eingriffsmittel in Formschluss gebracht werden, was eine sehr schnelle Kopplung und eine Übertragung hoher quasi-statischer Momente ermöglicht. Im Gegensatz zu konventionellen Schaltkupplungen (z.B. elektromagnetisch oder pneumatisch) entfällt der Ansteuerungsaufwand, was die Kosten deutlich reduziert. Fliehkraftkupplungen brauchen hohe Drehzahlen und übertragen Momente nur über Reibung, sie sind für diesen Einsatzzweck deshalb ebenso nicht geeignet.

Das Eingriffsmittel umfasst zweckmäßigerweise wenigstens ein über den Elektromotor antreibbares Zahnrad, das mit einer an der Lenksäule vorgesehenen Verzahnung zur Gabe des Drehmoments kämmt. Dieses Zahnrad wird dann in kämmenden Eingriff mit der lenksäulenseitigen Verzahnung gebracht, wenn erfassungsergebnisgemäß ein Drehmoment gegeben werden muss, ansonsten ist das über den Elektromotor antreibbare Zahnrad aus der Lenksäulenverzahnung ausgerückt. In einer konkreten Erfindungsausgestaltung kann vorgesehen sein, dass zwei auf einer über die Welle des Elektromotors bewegbaren Wippe angeordnete Zahnräder vorgesehen sind, die beide mit einem auf der Welle und zwischen den beiden Zahnrädern angeordneten Ritzel kämmen. Die Wippe, die wie auch das Antriebsritzel auf der Welle des Elektromotors angeordnet ist, kann über diese Welle nach links oder rechts gekippt werden, so dass entweder das eine oder das andere Zahnrad je nach Wellendrehrichtung mit der Lenksäulenverzahnung in Eingriff gebracht wird, wobei das jeweilige Zahnrad dann über das Ritzel entsprechend betrieben wird. Die Rückstellmittel, insbesondere die Rückstellfedern greifen bei dieser Ausgestaltung an der Wippe unmittelbar an, ziehen diese also dann, wenn der Elektromotor nicht mehr betrieben wird, in die neutrale Ausgangsstellung zurück, in der die beiden Zahnräder nicht in Eingriff mit der Lenksäulenverzahnung stehen.

Alternativ zur Wippenausführung kann auch ein über die Welle des Elektromotors bewegbarer Schwenkarm vorgesehen sein, an dem das mit einem an der Welle angeordneten Ritzel kämmende Zahnrad angeordnet ist. Auch hier ist also die Welle das Element, das für die Kopplung des am Schwenkarm befindlichen Zahnrads mit der Lenksäulenverzahnung verantwortlich ist. Je nach Drehrichtung der Welle wird der Schwenkarm in die eine oder in die andere Richtung geschwenkt, bis das mit dem wellenseitigen Ritzel kämmende Zahnrad mit der Lenksäulenverzahnung in Eingriff steht.

Eine weitere Alternativlösung sieht vor, dass das Eingriffsmittel wenigstens ein über den Elektromotor antreibbares Zahnrad und eine an diesem und zur Gabe des Drehmoments auch an der Lenksäule angreifende Kette oder Zahnriemen oder Keilriemen umfasst, wobei das Eingriffsmittel zweckmäßigerweise derart ausgebildet ist, dass die Kette oder der Zahnriemen oder der Keilriemen in einer Ruhestellung von der säulenseitigen Verzahnung gelöst ist und erst bei Betrieb des Elektromotors an dieser angreift. Das heißt die Kette/der Zahnriemen/der Keilriemen wird erst bei Betrieb des Elektromotors gespannt und an die Lenksäule angelegt, die ansonsten frei drehen kann. Zum Zweck des einfachen Spannens ist in Weiterbildung des Erfindungsgedankens eine über die Welle des Elektromotors bewegbare Wippe vorgesehen, an der zwei über ein an der Welle angeordnetes, zwischen ihnen befindliches Ritzel bewegbare Zahnräder angeordnet sind.

Eine weitere Alternativausführung sieht vor, dass das Eingriffsmittel einen mit der Lenksäule bewegungsgekoppelten, eine Innenverzahnung aufweisenden Kopplungsring aufweist, mit dessen Innenverzahnung bei Betrieb des Elektromotors ein oder mehrere eine Außenverzahnung aufweisende Mitnehmerelemente, die direkt oder indirekt vom Elektromotor angetrieben werden, in kämmenden Eingriff bringbar sind. Bei dieser Erfindungsausgestaltung ist der Kopplungsring in dauerhafter Bewegungskopplung mit der Lenksäule, was z. B. über einen Riemen, insbesondere einen Zahnriemen erfolgen kann. Der Kopplungsring dreht normalerweise frei um die Mitnehmerelemente, da diese bei fehlendem Gefahrensignal nicht mit der Innenverzahnung des Kopplungsrings in Eingriff stehen, sondern erst wenn ein solches Signal vorliegt und der Elektromotor betrieben wird. Diese Erfindungsausgestaltung zeichnet sich durch besonders hohe quasi-statisch übertragbare Momente und kurze Schaltwege aus, über welche die Mitnehmer mit der Innenverzahnung gekoppelt werden, so dass das Drehmoment sehr schnell angelegt werden kann.

In weiterer Ausgestaltung dieser Erfindungsalternative kann vorgesehen sein, dass mehrere Mitnehmer um ein an der Motorwelle angeordnetes Formteil derart angeordnet sind, dass sie bei einer Verdrehung des Formteils nach außen in Eingriff mit der Innenverzahnung bewegbar sind. Die Mitnehmer sind hier segmentartig ausgebildet bzw. angeordnet und gemeinsam über das Formteil bewegbar, wobei der oder jeder Mitnehmer um eine Drehachse schwenkbar gelagert sein kann, also bei Bewegung des Formteils in kämmenden Eingriff geschwenkt wird. Alternativ dazu ist auch eine längsverschiebbare Lagerung möglich, wobei die Mitnehmer hier in einer simultanen Längsbewegung in Eingriff gebracht werden.

Um die Mitnehmer auf einfache Weise wieder außer Eingriff zu bringen, kann jeder Mitnehmer gegen eine Rückstellkraft, auch hier zweckmäßigerweise über ein Federelement erzeugt, gelagert sein. Beispielsweise kann jeder Mitnehmer mit einem anderen Mitnehmer über ein Federelement gekoppelt sein, das heißt, die Mitnehmer ziehen sich quasi gegenseitig in die Ruhestellung, wenn der Elektromotor nicht betrieben wird.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung eines erfindungsgemäßen Kraftfahrzeugs,
- Fig. 2 - 4: eine bei dem erfindungsgemäßen Kraftfahrzeug verwendbare Einrichtung einer ersten Ausführungsform,
- Fig. 5 - 7: eine bei dem erfindungsgemäßen Kraftfahrzeug verwendbare Einrichtung einer zweiten Ausführungsform,
- Fig. 8 - 10: eine bei dem erfindungsgemäßen Kraftfahrzeug verwendbare Einrichtung einer dritten Ausführungsform,
- Fig. 11 u. 12: eine bei dem erfindungsgemäßen Kraftfahrzeug verwendbare Einrichtung einer vierten Ausführungsform,
- Fig. 13 u. 14: eine bei dem erfindungsgemäßen Kraftfahrzeug verwendbare Einrichtung einer fünften Ausführungsform,
- Fig. 15: eine Schnittansicht durch die Anordnung aus den Fig. 13 und 14,
- Fig. 16 u. 17: eine bei dem erfindungsgemäßen Kraftfahrzeug verwendbare Einrichtung einer sechsten Ausführungsform,
- Fig. 18: eine bei dem erfindungsgemäßen Kraftfahrzeug verwendbare Einrichtung einer siebten Ausführungsform und
- Fig. 19: eine bei dem erfindungsgemäßen Kraftfahrzeug verwendbare Einrichtung einer achten Ausführungsform.

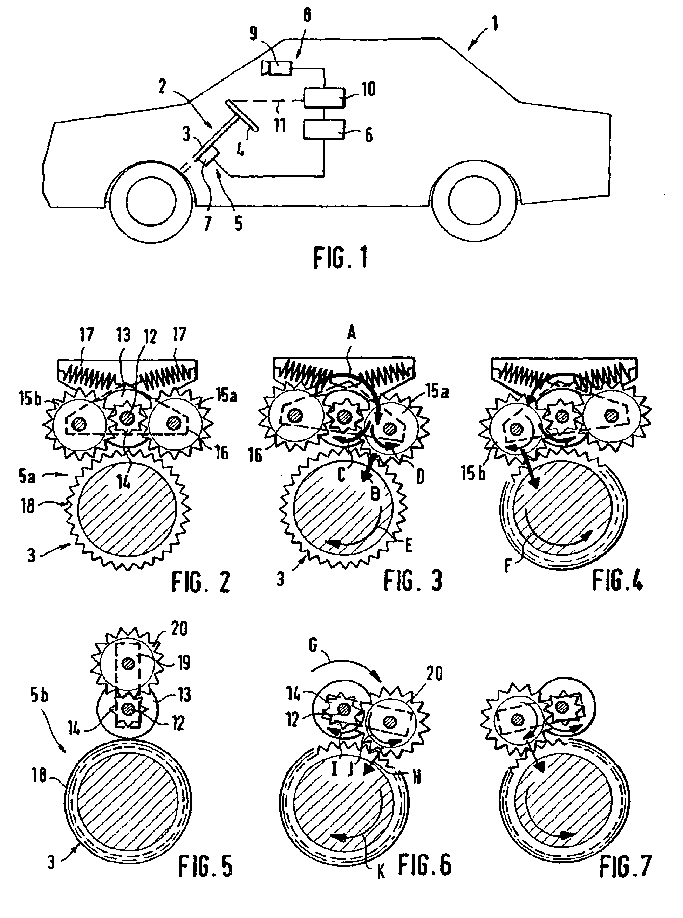

Fig. 1 zeigt ein erfindungsgemäßes Kraftfahrzeug 1 mit einem Lenksystem 2 umfassend eine Lenksäule 3 sowie ein an dieser angeordnetes Lenkrad 4. Der Lenksäule 3 zugeordnet ist eine Einrichtung 5 zur Gabe eines am Lenkrad 4 haptisch wahrnehmbaren, richtungsselektiven und impulsartig angelegten Drehmoments. Hierzu umfasst die Einrichtung 5 eine Steuerungseinrichtung 6 sowie einen in einem geeigneten Gehäuse 7 angeordneten, hier nicht näher gezeigten Elektromotor nebst zugeordnetem Eingriffsmittel, um das Drehmoment zu erzeugen und an die Lenksäule 3 zu übertragen.

Ferner ist ein System 8 beispielsweise zur Erfassung einer Abweichung der Fahrspur des Kraftfahrzeugs 1 von einer ausgezeichneten Fahrspur der Fahrbahn vorgesehen. Diese Einrichtung umfasst im gezeigten Ausführungsbeispiel eine Kamera 9, die nach vorne zur Windschutzscheibe hinausblickt und ein Fahrzeugvorfeld aufnimmt. Ihr nachgeschaltet ist eine Bildauswerte- und Steuerungseinrichtung 10, die derart ausgebildet ist, dass eine etwaige in eine Gefahrensituation führende Annäherung an eine Fahrbahnbegrenzungsmarkierung und dergleichen, also ein gefährliches Verlassen der ausgezeichneten Fahrspur, erfasst wird. Ein vergleichbares Erfassungssignal könnte von einem Spurwechselassistenzsystem kommen, welches eine belegte Nachbarspur beim Spurwechsel detektiert. Dieses, eine Gefahrensituation oder eine sich anbahnende Gefahrensituation anzeigende Erfassungssignal, wird der Steuerungseinrichtung 6 gegeben. Liegt ein solches vor, steuert diese den nicht näher gezeigten Elektromotor an, über welchen dann direkt oder indirekt auf die Lenksäule 3 ein richtungsselektives Drehmoment gegeben wird, so dass die Lenksäule wenngleich nur um ein äußerst kurzes, nicht in den eigentlichen Lenkbetrieb eingreifendes Stück verdreht bzw. angedreht wird, so dass dies vom Kraftfahrer über die am Lenkrad 4 befindlichen Hände gespürt wird. Dieses Drehmoment wird impulsartig für sehr kurze Zeit, z. B. 0,5 - 1 Sekunde angelegt, so dass er es zwar sicher, aber auch nur sehr kurzzeitig erfassen kann.

Wie durch die gestrichelte Linie 11 dargestellt kann über die Auswerte- und Steuerungseinrichtung 10 auch eine nicht näher gezeigte Vibrationseinrichtung im Lenkrad 4 angesteuert werden, die dem Fahrer ganz allgemein die Gefahrensituation anzeigt, während ihm über die Einrichtung 5 eine Richtungsinformation bezüglich der Lenkbewegung, die er zum Verlassen dieser sich anbahnenden Gefahrensituation durchzuführen hat, gegeben wird.

Fig. 2 zeigt eine erste Ausführungsform einer erfindungsgemäßen Einrichtung 5a. Auf der Abtriebswelle 12 des Elektromotors 13 befindet sich ein Ritzel 14, dem zwei Zahnräder 15a, 15b zugeordnet sind und mit ihm kämmen. Die beiden Zahnräder 15a, 15b sind an einer Wippe 16 angeordnet, die ebenfalls auf der Abtriebswelle 12 angeordnet ist, sie sind beidseits des Ritzels 14 vorgesehen. Die Wippe 16 selbst ist über zwei Federelemente 17 gegen eine Rückstellkraft gelagert. Gezeigt ist ferner die Lenksäule 3, an der eine Außenverzahnung 18 vorgesehen ist.

In der in Fig. 2 gezeigten Ruhestellung finden sich die beiden Zahnräder 15a, 15b nicht in kämmendem Eingriff mit der Außenverzahnung 18. Hat nun das System 8 eine Situation detektiert, die die impulsartige Gabe eines Drehmoments erfordert, so wird der Elektromotor 13 kurz bestromt, so dass sich die Abtriebswelle 12 dreht. Dies führt zum einen dazu, dass die auf ihr aufsitzende Wippe 16 drehbedingt bewegt wird, wie durch den Pfeil A dargestellt ist. Hierdurch wird das Zahnrad 15a in Eingriff mit der Außenverzahnung 18 gebracht. Bei weiterem Verdrehen der Abtriebswelle 12 rutscht die Lagerung der Wippe durch, es dreht sich jedoch das Ritzel 14, wie durch den Pfeil C angedeutet ist. Entsprechend gegengleich dreht sich das Zahnrad 15a, siehe Pfeil D. Hierdurch wird der Lenksäule 3 ein Drehmoment in Richtung des Pfeils E erteilt, und zwar solange, wie der Elektromotor 13 bestromt wird.

Fig. 4 zeigt den umgekehrten Betrieb, wenn der Elektromotor derart bestromt wird, dass er in die entgegengesetzte Richtung dreht. In diesem Fall kommt das Zahnrad 15b in Eingriff mit der Außenverzahnung 18, das resultierende Drehmoment ist, siehe Pfeil F, genau entgegengesetzt gerichtet.

Der Durchmesser der Zahnräder 15a, 15b wie auch die Innenverzahnung und die sonstigen Geometrien sind so gewählt, dass die Anpresskraft ausreicht, um das Moment zu übertragen. Um die trägheitsbedingte Bewegung der Wippe zu unterstützen, können die auf der Wippe befindlichen Zahnräder mit einer gewissen "Schwergängigkeit" ausgestattet sein.

Sobald die Stromzufuhr unterbrochen wird stellen die beiden Federelemente 17 die Wippe 16 wieder in die in Fig. 2 gezeigte Ausgangsposition zurück. Damit wird auch bei einem Systemausfall sichergestellt, dass ein normales Lenken jederzeit möglich ist, ohne Blockieren oder dergleichen. Selbst bei Eingriff eines der Zahnräder 15a, 15b ist durch die Motordimensionierung und die Wahl der Untersetzung ein problemloses Übersteuern durch den Fahrer in beiden Richtungen möglich. Eine Wahl von Stahl-/Kunststoffräder als Paarung verringert die Geräuschbildung bei Ineinandergreifen der Verzahnungen. Der Motor selbst kann zum Erreichen der notwendigen Momente bereits mit einem Getriebe ausgestattet sein, muss sich aber noch durchdrehen lassen, um übersteuerbar zu bleiben. Die gesamte Mimik ist unmittelbar an der Lenksäule angeordnet, siehe Fig. 1.

Die Fig. 5 - 7 zeigen eine zweite erfindungsgemäße Ausführungsform einer Einrichtung 5b. Auch hier weist die Lenksäule 3 eine Außenverzahnung 18 auf. Auf der Abtriebswelle 12 des Elektromotors 13 ist ein Schwenkarm 19 angeordnet, an dem wiederum ein Zahnrad 20 vorgesehen ist, das stets mit einem an der Abtriebswelle 12 angeordneten Ritzel 14 kämmt. Wird nun bei Vorliegen eines Ansteuersignals der Elektromotor 13 bestromt, so wird der Schwenkarm 19 beispielsweise in Richtung des Pfeils G in Fig. 6 geschwenkt. Das Zahnrad 20 wird, siehe Pfeil H, in kämmenden Eingriff mit der Außenverzahnung 18 gebracht. Bei weiterem Drehen dreht die Abtriebswelle 12 durch die Schwenkarmlagerung durch, es dreht sich also lediglich noch das Ritzel 14 in Richtung des Pfeils I, während das Zahnrad gegengleich in Richtung des Pfeils J dreht und hierüber der Lenksäule ein Drehmoment in Richtung des Pfeils K erteilt wird. Fig. 7 zeigt die Funktionsweise, wenn der Elektromotor entsprechend anderspolig bestromt wird. Bei dieser Ausführungsform dreht sich die Wippe bei Drehrichtungsumkehr um einen Winkel von mehr als 180° und muss in einem entsprechenden Freiraum angeordnet sein.

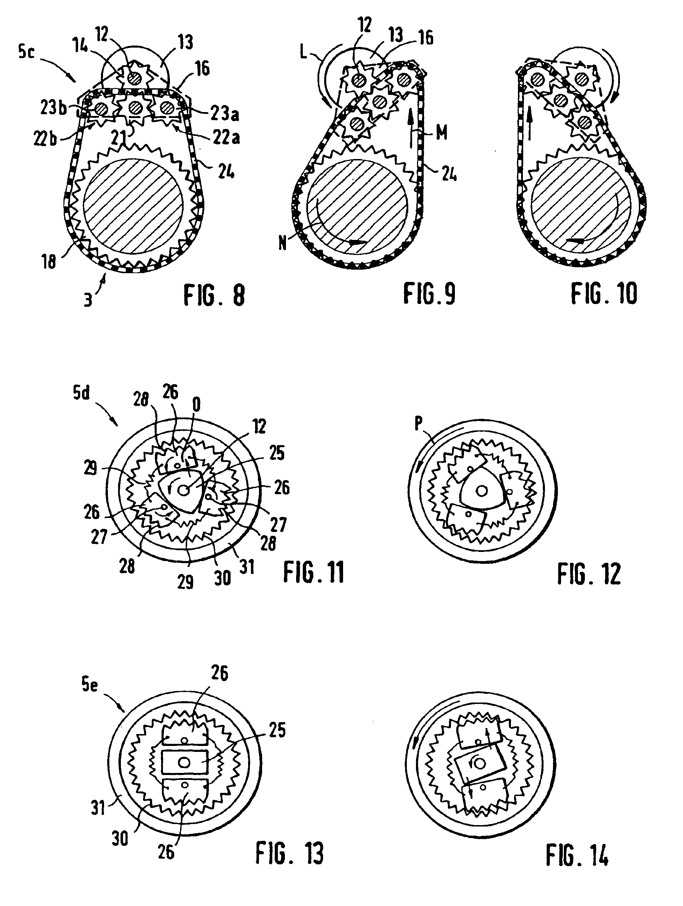

Die Fig. 8 bis 10 zeigen eine weitere erfindungsgemäße Ausführungsform einer Einrichtung 5c. An der Abtriebswelle 12 des Elektromotors 13 befindet sich auch hier ein Ritzel 14 sowie eine Wippe 16, an deren Rückseite ein Zahnrad 21 angeordnet ist, das mit dem Ritzel 14 dauernd in Eingriff steht.

An der Wippe 16 sind zwei weitere Zahnradkombinationen 22a, 22b vorgesehen, die jeweils ein an der Hinterseite der Wippe und an der Vorderseite der Wippe angeordnetes Zahnrad umfassen, die auf einer gemeinsamen Welle drehfest gelagert sind. Der jeweils hintere Teil der jeweiligen Zahnradkombination 22a, 22b steht mit dem Zahnrad 21 in Kopplungsverbindung. Über die beiden vorderen Zahnräder 23a, 23b läuft im gezeigten Beispiel eine Kette 24, gleichermaßen kann auch ein Zahnriemen oder dergleichen verwendet werden. Wie Fig. 8 zeigt befindet sich dieser in der Ruhestellung nicht in Eingriff mit der Außenverzahnung 18 der Lenksäule 3.

Wird nun über die Bildanalyse- und Steuerungseinrichtung 10 ein Signal gegeben und wird der Elektromotor 13 bestromt, so dreht sich die Abtriebswelle 12 und mit ihr die Wippe 16, siehe den Pfeil L. Hierdurch wird die Kette 24 gespannt und greift in die Außenverzahnung 18 ein, wie Fig. 9 zeigt. Bei hinreichendem Spannen dreht die Abtriebswelle 12 wieder durch die Wippenlagerung durch, es dreht sich lediglich noch das Ritzel 14, welches das Zahnrad 21 antreibt und über welches die Zahnradkombinationen 22a, 22b angetrieben werden. Dies führt dazu, dass die Kette 24 im gezeigten Beispiel gemäß Fig. 9 in Richtung des Pfeils M bewegt wird und hierüber der Lenksäule ein impulsartiges Drehmoment in Richtung des Pfeils N erteilt wird. Fig. 10 zeigt den Fall der Drehrichtungsumkehr, in diesem Fall wird ein entgegengesetzt gerichtetes Drehmoment an die Lenksäule gegeben. Bei dieser Ausführungsform kann die Rückstellung in die in Fig. 8 gezeigte Ruhestellung gegebenenfalls ohne Federn allein durch die Schwerkraft erfolgen. Selbstverständlich können auch Rückstellfedern an der Wippe 16 angreifen. In der Ruhestellung hängt die Kette bzw. der Zahnriemen lose, so dass sich die Lenksäule frei drehen lässt.

Die Fig. 11 und 12 zeigen eine weitere erfindungsgemäße Ausführungsform einer Einrichtung 5d. Bei dieser ist der Elektromotor nicht näher gezeigt, sondern lediglich die Abtriebswelle 12 und ein an dieser angeordnetes Formteil 25. Diesem zugeordnet sind im gezeigten Beispiel drei segmentartige Mitnehmer 26, die um jeweils eine Drehachse 27 drehbar gelagert sind. An ihrer Außenseite ist eine Verzahnung 28 vorgesehen. Über Federelemente 29 sind sie untereinander gekoppelt, wobei diese Federelemente die Mitnehmer 26 stets in die in Fig. 11 gezeigte Ruhestellung ziehen.

Wird nun der nicht gezeigte Elektromotor bestromt, so dreht sich die Abtriebswelle und mit ihr das Formteil 25. Es legt sich an die inneren Anlageflächen der Mitnehmer 26 an, wie exemplarisch durch den Pfeil O gezeigt. Dies führt dazu, dass jeder der Mitnehmer um die jeweilige Drehachse 27 im gezeigten Beispiel nach links (siehe die jeweils eingezeichneten Pfeile) verschwenkt wird. Hierdurch wird die Außenverzahnung 28 in Eingriff mit einer Innenverzahnung 30 eines Kopplungsrings 31 gebracht und ein Formschluss erzeugt. Dieser Kopplungsring 31 steht permanent in Kopplungsverbindung mit der hier nicht gezeigten Lenksäule, z. B. über eine Zahnriemenverbindung, die um die Außenfläche des Kopplungsrings 31 und um die Lenksäule läuft. Selbstverständlich ist der Kopplungsring entsprechend abgestützt, was in den Figuren nicht näher gezeigt ist.

Bei weiterem Drehen des Formteils 25 nach erfolgtem Eingriff wird der Kopplungsring in Richtung des Pfeils P weitergedreht, worüber über die Riemenkopplung an die Lenksäule ein Drehmoment erteilt wird.

Die Fig. 13 und 14 zeigen eine weitere Ausführungsform einer Einrichtung 5e. Bei dieser sind lediglich zwei Mitnehmer 26 vorgesehen, die beide wie die Fig. 13 und 14 zeigen über das Formteil 25 je nach Drehrichtung nach links oder rechts in Eingriff mit der Innenverzahnung 30 des Kopplungsrings 31 gebracht werden können.

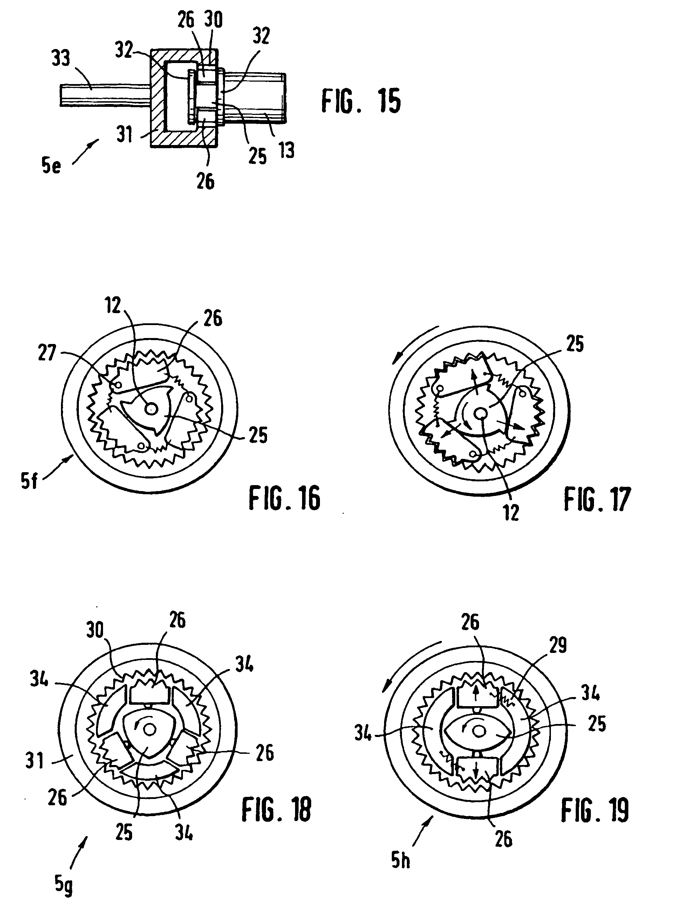

Fig. 15 zeigt eine Schnittansicht durch eine solche Anordnung 5e in Form einer Prinzipskizze. Gezeigt ist dort der Elektromotor 13 sowie das Formteil 25, dem die Mitnehmer 26, die an geeigneten Mitnehmerscheiben 32 entsprechend schwenkbar angeordnet sind, befestigt sind. Der Kopplungsring 31 mit seiner Innenverzahnung 30 ist an einem Ende kapselartig geschlossen und zeigt eine Abtriebswelle 33, an welcher ebenfalls die Riemenkopplung zur Lenksäule vorgesehen sein kann.

Die Fig. 16 und 17 zeigen eine weitere Einrichtung 5f, die insoweit der Einrichtung 5e entspricht, jedoch sind hier die Mitnehmer 26 nicht mittig, sondern seitlich um eine Drehachse 27 gelagert. Das heißt, diese Mitnehmer 26 können nur in eine Richtung wie in Fig. 17 gezeigt verschwenkt und ihre Außenverzahnungen mit der Innenverzahnung in Eingriff gebracht werden. Hier kann also mit einer solchen einzelnen Einrichtung ein Drehmoment nur in eine Richtung erteilt werden. Um ein Drehmoment auch in die andere Richtung erteilen zu können, muss eine zweite solche spiegelbildlich ausgeführte Einrichtung bzw. ein solcher spiegelbildlich ausgeführter Einrichtungsteil vorgesehen sein, die/der z.B. in einer vorgelagerten Ebene ebenfalls auf der Abtriebswelle 12 angeordnet ist oder aber einen eigenen Elektromotor, der separat zu bestromen ist, aufweist. Für diesen zweiten Fall wird je nach von der Bildanalyse- und Steuerungseinrichtung 10 gegebenem Signal der eine oder der andere Elektromotor bestromt.

Fig. 18 zeigt schließlich eine weitere Ausführungsform einer Einrichtung 5g. Hier sind die Mitnehmer 26 längsverschieblich in einer entsprechenden Halterung 34 gelagert. Wird das Formteil 25 gedreht, so werden die Mitnehmer 26 längs verschoben und nach außen in Eingriff mit der Innenverzahnung 30 des Kopplungsrings 31 gebracht. Dreht das Formteil 25 weiter, wird je nach Drehrichtung der Drehimpuls erteilt und über die Riemenkopplung auf die Lenksäule gegeben.

Schließlich zeigt Fig. 19 eine im Wesentlichen der Ausführungsform nach Fig. 18 entsprechende Einrichtung 5h. Hier sind jedoch lediglich zwei längsbeweglich in einer Halterung 34 angeordnete Mitnehmer 26 vorgesehen, die über ein entsprechend in seiner Form ausgebildetes Formteil 25 bei Bestromen des Elektromotors nach außen geschoben werden. Dreht das Formteil 25 weiter, wird je nach Drehrichtung ein entsprechend richtungsselektiver Drehimpuls erteilt. Endet die Bestromung, ziehen die Federelemente 29 die Mitnehmer 26 aus dem Eingriff zurück.

Hervorzuheben ist nochmals, dass bei jeder der beschriebenen Ausführungsformen stets gewährleistet ist, dass trotz Eingriffs der Zahnräder, also Verzahnungen, es immer gewährleistet ist, dass der Fahrer den Elektromotor überdrehen kann, also entgegen der zu erteilenden Drehmomentrichtung die Lenkbewegung erfolgen kann.

## Patentansprüche

1. Kraftfahrzeug mit einem Lenksystem umfassend eine Lenksäule (3) samt Lenkrad (4) sowie einem System (8) zur Erfassung einer Abweichung der Fahrspur des Kraftfahrzeugs von der ausgezeichneten Fahrspur der Fahrbahn,
wobei eine Einrichtung (5, 5a, ..., 5h) zur direkten oder indirekten Gabe eines über das Lenkrad (4) haptisch wahrnehmbaren, der Warnung des Fahrers dienenden, nicht in den eigentlichen Lenkbetrieb eingreifenden Drehmoments in Abhängigkeit einer von dem Abweichungserfassungssystem (8) erfassten Richtungsabweichung vorgesehen ist, wobei die Einrichtung (5, 5a, ..., 5h) zur Gabe des Drehmoments an der Lenksäule (3) angreift und dieser das Drehmoment erteilt und einen Elektromotor (13) umfasst, der zur Gabe des Drehmoments betrieben wird, **dadurch gekennzeichnet,**
**dass** das zu gebende Drehmoment richtungsselektiv und impulsartig angelegt ist und dass dem Elektromotor (13) ein mechanisches Eingriffmittel zugeordnet ist, das durch den Betrieb des Elektromotors (13) mit der Lenksäule (3) gekoppelt wird oder über das der Elektromotor (13) durch seinen Betrieb mit der Lenksäule (3) gekoppelt wird.

2. Kraftfahrzeug nach Anspruch 1,
**dadurch gekennzeichnet,**
**dass** die Einrichtung (5, 5a, ..., 5h) derart ausgelegt ist und/oder das gegebene Drehmoment derart bemessen ist, dass das Lenkrad (4) vom Fahrer trotz in Betrieb befindlicher Einrichtung (5, 5a, ..., 5h) und/oder gegebenem Drehmoment in die entgegengesetzte Richtung drehbar ist.

3. Kraftfahrzeug nach Anspruch 1 oder 2,
**dadurch gekennzeichnet,**
**dass** die Einrichtung (5, 5a, ..., 5h) nur während der Zeit, während der das Drehmoment zu geben ist, an der Lenksäule (3) angreift oder in einer momentübertragenden Verbindung steht.

4. Kraftfahrzeug nach einem der vorangehenden Ansprüche,
**dadurch gekennzeichnet,**
**dass** Mittel (17, 29) zum Rückstellen des mechanischen Eingriffsmittels in eine Ruhelage vorgesehen sind, wenn der Elektromotor (13) nicht mehr betrieben wird.

5. Kraftfahrzeug nach Anspruch 4,
**dadurch gekennzeichnet,**
**dass** die Mittel eine oder mehrere Rückstellfedern (17, 29) umfassen, die das Eingriffsmittel in die Ruhelage bringen.

6. Kraftfahrzeug nach einem der vorangehenden Ansprüche,
**dadurch gekennzeichnet,**
**dass** Eingriffsmittel wenigstens ein über den Elektromotor (13) antreibbares Zahnrad (15a, 15b, 20) umfasst, das mit einer an der Lenksäule (3) vorgesehenen Verzahnung (18) zur Gabe des Drehmoments kämmt.

7. Kraftfahrzeug nach Anspruch 6,
**dadurch gekennzeichnet,**
**dass** zwei auf einer über die Welle (12) des Elektromotors (13) bewegbaren Wippe (16) angeordnete Zahnräder (15a, 15b) vorgesehen sind, die beide mit einem auf der Welle (12) und zwischen den beiden Zahnrädern (15a, 15b) angeordneten Ritzel (14) kämmen.

8. Kraftfahrzeug nach Anspruch 7,
**dadurch gekennzeichnet,**
**dass** das Rückstellmittel, insbesondere die Rückstellfedern (17) an der Wippe (16) angreifen.

9. Kraftfahrzeug nach Anspruch 6,
**dadurch gekennzeichnet,**
**dass** ein über die Welle (12) des Elektromotors (13) bewegbarer Schwenkarm (19) vorgesehen ist, an dem das mit einem an der Welle (12) angeordneten Ritzel (14) kämmende Zahnrad (20) angeordnet ist.

10. Kraftfahrzeug nach einem der Ansprüche 1 bis 5,
**dadurch gekennzeichnet,**
**dass** das Eingriffsmittel wenigstens ein über den Elektromotor (13) antreibbares Zahnrad (23a, 23b) und eine an diesem und zur Gabe des Drehmoments auch an der Lenksäule (3) angreifende Kette (24) oder Zahnriemen oder Keilriemen umfasst.

11. Kraftfahrzeug nach Anspruch 10,
**dadurch gekennzeichnet,**
**dass** das Eingriffsmittel derart ausgebildet ist, dass die Kette (24) oder der Zahnriemen oder der Keilriemen in einer Ruhestellung von der säulenseitigen Verzahnung (18) gelöst ist und erst bei Betrieb des Elektromotors (13) an dieser angreift.

12. Kraftfahrzeug nach Anspruch 11,
**dadurch gekennzeichnet,**
**dass** eine über die Welle (12) des Elektromotors (13) bewegbare Wippe (16) vorgesehen ist, an der zwei über ein an der Welle (12) angeordnetes, zwischen ihnen befindliches Ritzel (21) bewegbare Zahnräder angeordnet sind.

13. Kraftfahrzeug nach einem der Ansprüche 1 bis 5,
**dadurch gekennzeichnet,**
**dass** das Eingriffsmittel einen mit der Lenksäule (3) bewegungsgekoppelten, eine Innenverzahnung (30) aufweisenden Kopplungsring (31) aufweist, mit dessen Innenverzahnung (30) bei Betrieb des Elektromotors (13) ein oder mehrere eine Außenverzahnung (28) aufweisende Mitnehmerelemente (26), die direkt oder indirekt vom Elektromotor (13) angetrieben werden, in kämmenden Eingriff bringbar ist.

14. Kraftfahrzeug nach Anspruch 13,
**dadurch gekennzeichnet,**
**dass** mehrere Mitnehmer (26) um ein an der Motorwelle (12) angeordnetes Formteil (25) derart angeordnet sind, dass sie bei einer Verdrehung des Formteils (25) nach Außen in Eingriff mit der Innenverzahnung (30) bewegbar sind.

15. Kraftfahrzeug nach Anspruch 14,
**dadurch gekennzeichnet,**
**dass** der oder jeder Mitnehmer (26) um eine Drehachse (27) schwenkbar oder längsverschiebbar gelagert ist.

16. Kraftfahrzeug nach einem der Ansprüche 13 bis 15,
**dadurch gekennzeichnet,**
**dass** die jeder Mitnehmer (26) gegen eine Rückstellkraft gelagert ist.

17. Kraftfahrzeug nach Anspruch 16,
**dadurch gekennzeichnet,**
**dass** jeder Mitnehmer (26) über ein die Rückstellkraft erzeugendes Federelement (29) mit einem anderen Mitnehmer (26) gekoppelt ist.

18. Kraftfahrzeug nach einem der Ansprüche 13 bis 17,
**dadurch gekennzeichnet,**
**dass** der Kopplungsring (31) über einen Riemen, insbesondere einen Zahnriemen mit der Lenksäule dauerhaft bewegungsgekoppelt ist.

## Claims

1. Motor vehicle having a steering system comprising a steering column (3) plus steering wheel (4) and a system (8) for sensing a departure of the path being followed by the vehicle from the marked-out lane on the carriageway, a system (5, 5a, ..., 5h) being provided for the direct or indirect application, as a function of a directional departure sensed by the departure sensing system (8), of a torque which is haptically perceptible through the steering wheel (4), which acts as a warning to the driver, and which does not intervene in the actual operation of the steering, the system (5, 5a, ..., 5h) for applying the torque engaging with the steering column (3) and imparting the torque thereto and comprising an electric motor (13) which is operated to apply the torque, **characterised in that** the torque to be applied is arranged to be selective as to direction and of a pulsed nature and **in that** the electric motor (13) has associated with it a mechanical engaging means which becomes coupled to the steering column (3) due to the operation of the electric motor (13) or by means of which the electric motor (13), due to the operation of said electric motor (13), becomes coupled to the steering column (3).

2. Motor vehicle according to claim 1, **characterised in that** the system (5, 5a, ... 5h) is so designed, and/or the torque applied is of a size such, that the steering wheel (4) can be turned by the driver in the opposite direction even when the system (5, 5a, ..., 5h) is operating and/or a torque is applied.

3. Motor vehicle according to claim 1 or 2, **characterised in that** the system (5, 5a, ..., 5h) engages with the steering column (3) or is in torque-transmitting connection therewith only during the time for which the torque has to be applied.

4. Motor vehicle according to one of the preceding claims, **characterised in that** means (17, 29) are provided for resetting the mechanical engaging means to a rest position when the electric motor (13) is no longer being operated.

5. Motor vehicle according to claim 4, **characterised in that** the means comprise one or more resetting springs (17, 29) which move the engaging means to the rest position.

6. Motor vehicle according to one of the preceding claims, **characterised in that** the engaging means comprises at least one gear (15a, 15b, 20) which can be driven by means of the electric motor (13) and which meshes with a set of teeth (18) for applying the torque which are provided on the steering column (3).

7. Motor vehicle according to claim 6, **characterised in that** there are provided two gears (15a, 15b) which are arranged on a rocker (16) able to be moved by means of the shaft (12) of the electric motor (13), both of which mesh with a pinion (14) which is arranged on the shaft (12) and between the two gears (15a, 15b).

8. Motor vehicle according to claim 7, **characterised in that** the resetting means, and in particular the resetting springs (17), engage with the rocker (16).

9. Motor vehicle according to claim 6, **characterised in that** there is provided a pivoting arm (19) which is able to be moved by means of the shaft (12) of the electric motor (13) and on which is arranged the gear (20), which meshes with a pinion (14) arranged on the shaft (12).

10. Motor vehicle according to one of claims 1 to 5, **characterised in that** the engaging means comprises at least one gear (23a, 23b) able to be driven by means of the electric motor (13) and a chain (24) or toothed belt or vee belt which engages with said gear (23a, 23b) and also, to apply the torque, with the steering column (3).

11. Motor vehicle according to claim 10, **characterised in that** the engaging means is so designed that the chain (24) or toothed belt or vee belt is released from the set of teeth (18) belonging to the column in a rest position and does not engage therewith until the electric motor (13) operates.

12. Motor vehicle according to claim 11, **characterised in that** there is provided a rocker (16) which is able to be moved by means of the shaft (12) of the electric motor (13) and on which are arranged two gears which can be moved by means of a pinion (21) which is arranged on the shaft (12) and which is situated between them.

13. Motor vehicle according to one of claims 1 to 5, **characterised in that** the engaging means has a coupling ring (31) whose movement is coupled to the movement of the steering column (3) and which has a set of internal teeth (30) with which one or more entraining members (26), which have sets of external teeth (28) and which are directly or indirectly driven by the electric motor (13), can be brought into meshing engagement when the electric motor (13) operates.

14. Motor vehicle according to claim 13, **characterised in that** a plurality of entrainers (26) are so arranged around a shaped part (25) arranged on the motor shaft (12) that, when the shaped part (25) is rotated, they can be moved outwards into engagement with the set of internal teeth (30).

15. Motor vehicle according to claim 14, **characterised in that** the or each entrainer (26) is mounted to be pivotable or longitudinally displaceable on a pivot shaft (27).

16. Motor vehicle according to one of claims 13 to 15, **characterised in that** each entrainer (26) is mounted to have an opposing resetting force.

17. Motor vehicle according to claim 16, **characterised in that** each entrainer (26) is coupled to another entrainer (26) by means of a spring member (29) which generates the resetting force.

18. Motor vehicle according to one of claims 13 to 17, **characterised in that** the movement of the coupling ring (31) is permanently coupled to that of the steering column by means of a belt and in particular a toothed belt.

## Revendications

1. Véhicule automobile équipé d'un système de direction comprenant une colonne de direction (3) incluant le volant de direction (4) et équipé d'un système (8) servant à détecter toute déviation de la voie de circulation par le véhicule automobile par rapport à la voie de circulation enregistrée de la chaussée,
sachant qu'un dispositif (5, 5a, ..., 5h) est prévu pour fournir directement ou indirectement un couple de rotation perceptible de manière haptique par l'intermédiaire du volant de direction (4), servant à avertir le conducteur, n'intervenant pas dans le fonctionnement de direction à proprement parler selon une déviation de direction détectée par le système de détection de déviation (8), sachant que le dispositif (5, 5a, ..., 5h) servant à fournir le couple de rotation vient en prise au niveau de la colonne de direction (3), délivre à cette dernière le couple de rotation et comprend un moteur électrique (13) fonctionnant pour fournir le couple de rotation,
**caractérisé en ce**
**que** le couple de rotation à fournir est appliqué de manière sélective en direction et de manière impulsionnelle, et en ce qu'un moyen d'engrènement mécanique est associé au moteur électrique (13), ledit moyen d'engrènement étant couplé à la colonne de direction (3) grâce au fonctionnement du moteur électrique (13) ou permettant de coupler le moteur électrique (13), par son fonctionnement, à la colonne de direction (3).

2. Véhicule automobile selon la revendication 1,
**caractérisé en ce**
**que** le dispositif (5, 5a, ..., 5h) est conçu de telle manière et/ou que le couple de rotation fourni présente des mesures telles que le volant de direction (4) peut être tourné par le conducteur dans le sens opposé en dépit du dispositif (5, 5a, ..., 5h) en fonctionnement et/ou en dépit du couple de rotation fourni.

3. Véhicule automobile selon la revendication 1 ou 2,
**caractérisé en ce**
**que** le dispositif (5, 5a, ..., 5h) vient en prise au niveau du volant de direction (3) ou est relié à ce dernier de manière à transmettre le couple uniquement pendant la période au cours de laquelle le couple de rotation est à fournir.

4. Véhicule automobile selon l'une quelconque des revendications précédentes,
**caractérisé en ce**
**que** sont prévus des moyens (17, 29) servant à rappeler dans une position de repos le moyen d'engrènement mécanique, lorsque le moteur électrique (13) ne fonctionne plus.

5. Véhicule automobile selon la revendication 4,
**caractérisé en ce que** les moyens comprennent un ou plusieurs ressorts de rappel (17, 29), lesquels amènent le moyen d'engrènement dans la position de repos.

6. Véhicule automobile selon l'une quelconque des revendications précédentes,
**caractérisé en ce**
**qu'**au moins une roue dentée (15a, 15b, 20) pouvant être entraînée par l'intermédiaire du moteur électrique (13) comprend des moyens d'engrènement, ladite roue dentée venant en prise avec une denture (18) prévue au niveau de la colonne de direction (3) afin de délivrer le couple de rotation.

7. Véhicule automobile selon la revendication 6,
**caractérisé en ce**
**que** sont prévues deux roues dentées (15a, 15b), lesquelles sont disposées sur une bascule (16) pouvant être déplacée sur l'arbre (12) du moteur électrique (13) et qui viennent en prise avec un pignon (14) disposé sur l'arbre (12) et entre les deux roues dentées (15a, 15b).

8. Véhicule automobile selon la revendication 7,
**caractérisé en ce**
**que** les moyens de rappel, en particulier les ressorts de rappel (17), viennent en prise au niveau de la bascule (16).

9. Véhicule automobile selon la revendication 6,
**caractérisé en ce**
**qu'**est prévu un bras de pivotement (19), qui peut être déplacé sur l'arbre (12) du moteur électrique (13) et au niveau duquel est disposée la roue dentée (20) venant en prise avec un pignon (14) disposé au niveau de l'arbre (12).

10. Véhicule automobile selon l'une quelconque des revendications 1 à 5,
**caractérisé en ce**
**que** le moyen d'engrènement comprend au moins une roue dentée (23a, 23b) pouvant être entraînée par l'intermédiaire du moteur électrique (13) et une chaîne (24) ou une courroie dentée ou une courroie trapézoïdale venant en prise au niveau de la roue dentée et également au niveau de la colonne de direction (3) afin de fournir le couple de rotation.

11. Véhicule automobile selon la revendication 10,
**caractérisé en ce**
**que** le moyen d'engrènement est réalisé de telle manière que la chaîne (24) ou la courroie dentée ou la courroie trapézoïdale est détachée de la denture (18) côté colonne dans la position de repos et vient en prise au niveau de ladite denture uniquement dès que le moteur électrique (13) fonctionne.

12. Véhicule automobile selon la revendication 11,
**caractérisé en ce**
**qu'**est prévue une bascule (16), qui peut être déplacée sur l'arbre (12) du moteur électrique (13) et au niveau de laquelle sont disposées deux roues dentées disposées au niveau de l'arbre (12), pouvant être déplacées entre le pignon (21) se trouvant entre elles.

13. Véhicule automobile selon l'une quelconque des revendications 1 à 5,
**caractérisé en ce**
**que** le moyen d'engrènement présente une bague de couplage (31) cinétiquement couplée à la colonne de direction (3), présentant une denture intérieure (30), avec laquelle, lorsque le moteur électrique (13) est en fonctionnement, un ou plusieurs éléments entraîneurs (26), présentant une denture extérieure (28), peuvent être amenés en prise, lesdits éléments entraîneurs étant entraînés directement ou indirectement par le moteur électrique (13).

14. Véhicule automobile selon la revendication 13,
**caractérisé en ce**
**que** plusieurs entraîneurs (26) sont disposés autour d'une pièce moulée (25) disposée au niveau de l'arbre de moteur (12) de telle manière qu'ils peuvent être déplacés en prise avec la denture intérieure (30) lors d'une rotation de la pièce moulée (25) vers l'extérieur.

15. Véhicule automobile selon la revendication 14,
**caractérisé en ce**
**que** l'entraîneur ou chaque entraîneur (26) est monté de manière rotative ou déplacé longitudinalement par coulissement autour d'un axe de rotation (27).

16. Véhicule automobile selon l'une quelconque des revendications 13 à 15,
**caractérisé en ce**
**que** chaque entraîneur (26) est monté dans le sens opposé à une force de rappel.

17. Véhicule automobile selon la revendication 16,
**caractérisé en ce**
**que** chaque entraîneur (26) est couplé à un autre entraîneur (26) par l'intermédiaire d'un élément formant ressort (29) de rappel.

18. Véhicule automobile selon l'une quelconque des revendications 13 à 17,
**caractérisé en ce**
**que** la bague de couplage (31) est couplée à la colonne de direction cinétiquement et de manière durable par l'intermédiaire d'une courroie, en particulier par l'intermédiaire d'une courroie dentée.
